# EUROPEAN PATENT APPLICATION

(11) **EP 2 463 755 A2**
(43) Date of publication of application: **13.06.2012**
(21) Application number: 11192652.3
(22) Date of filing: 08.12.2011
(51) Int. Cl.: G06F 3/033, G06F 3/041

(54) **Portable data terminal stylus with rolling ball tip**

(30) Priority: 13.12.2010 US 966543
(71) Applicant: Hand Held Products, Inc., Skaneateles Falls, New York 13153 (US)
(72) Inventor: Linn, Eric, Morristown, NJ New Jersey 07962-2245 (US)
(74) Representative: Buckley, Guy Julian

(57) **Abstract**

A portable data terminal includes a housing comprising an upper surface, a side surface, a front surface, and a rear surface. A touch screen including a display and a touch sensitive overlay is coupled to the upper surface of the housing. The portable data terminal further includes a stylus for activating the touch screen. The stylus reduces wear and tear to the touch sensitive overlay. The stylus includes a body having a proximal end and a distal end, the proximal end having an internal socket defined by a first spherical radius. The stylus further includes a roller ball captured by the socket, the roller ball being defined by a second spherical radius that is less than the first spherical radius. The roller ball protrudes from the proximal end of the body by a distance P, wherein P is less than one half of the second spherical radius. In one embodiment, the dynamic coefficient of friction relative to the touch sensitive overlay is in the range of 0.2 - 0.4. In another embodiment, the roller ball is comprised of polyoxymethylene.

## Description

### Cross Reference to Related Applications

This application claims priority to U. S. Patent Application No. 12/966,543 filed December 13, 2010 entitled, "Portable Data Terminal Stylus with Rolling Ball Tip." The priority of the above application is claimed and is incorporated herein by reference in its entirety.

### Field of the Invention

This disclosure relates generally to portable data terminals and, more specifically, to a touchpad stylus for the portable data terminal.

### Background of the Invention

Portable data terminals (PDTs) are a type of data collection device used to collect, interpret, process, and ultimately transfer data to a larger data processing system. PDTs generally comprise a mobile computer, a keypad, and a data acquisition device. It is to be noted that some PDTs utilize more durable or "industrial" versions of their constituent components. The mobile computer generally comprises a hand held (or "pocket") computing device, such as those available from Intel, Palm, Hewlett Packard, and Dell. Keypads come in a variety of alpha-numeric and numeric configurations. The data acquisition device generally comprises a device that captures data from, for example, radio frequency IDs (RFID), images, and bar codes. Data may also be captured via keypad entry and utilization of a touch pad associated with the mobile computer. PDTs are available from several sources, including the assignee of the present application: Honeywell Hand Held Products.

The user interface for PDTs are typically a few buttons and a touch screen display. The touch screen is used to both display information and to capture information. The data capture generally uses a stylus to select buttons or areas on the screen for certain functions, draw shapes onto the screen, use character recognition to enter text or numbers, or other methods of data capture.

One of the most important parts of the touch screen is the very sensitive, thin, pliable and transparent overlay used to detect the relationship between the pen/stylus and the screen. As the stylus slides over or taps on this layer, information is translated to the circuitry below the screen providing an image or representation according to the program being used by the hand-held computer at that time.

One noted problem with touch screen displays is that the flexible membrane, in order to permit high-resolution pointing and/or writing, is typically very thin and delicate, being particularly subject to damage in the event that the user subjects the touchpad to significant impacting contact by the stylus, which necessarily also has a fine point for operating the touchpad at high resolution.

After much use, this layer becomes damaged, scratched, and/or marred. Occasionally the damage is so severe as to render stylus input to the screen either impossible or severely distorted. In many instances, it may lead to a required replacement of the input screen. Damaged screens can result in lost data, inability to obtain data when needed.

### Summary of the Invention

According to one aspect of the invention, a portable data terminal includes a housing comprising an upper surface, a side surface, a front surface, and a rear surface. A touch screen including a display and a touch sensitive overlay is coupled to the upper surface of the housing. The portable data terminal further includes a stylus for activating the touch screen that reduces wear and tear to the touch sensitive overlay. The stylus includes a body having a proximal end and a distal end, the proximal end having an internal socket defined by a first spherical radius, and further comprising a roller ball captured by the socket, the roller ball being defined by a second spherical radius that is less than the first spherical radius, the roller ball protruding from the proximal end of the body by a distance P, wherein P is less than one half of the second spherical radius.

According to another aspect of the invention, a stylus for a portable data terminal is provided that includes a body having a proximal end and an opposing distal end. The proximal end of the body includes an internal socket defined by a first spherical radius. The socket includes a capturing and retention element having a cup region and a cap region. A roller ball is disposed within the capturing and retention element of the socket. The roller ball comprises a second spherical radius that is less than the first spherical radius. The roller ball protrudes from the proximal end of the body by a distance P, wherein P is less than one half of the second spherical radius. The roller ball is manufactured from an engineered thermoplastic.

### Brief Description of the Drawings

The features described herein can be better understood with reference to the drawings described below. The drawings are not necessarily to scale, emphasis instead generally being placed upon illustrating the principles of the invention. In the drawings, like numerals are used to indicate like parts throughout the various views.

FIGS. 1 and 2 are perspective views of a portable data terminal according to one embodiment of the invention;

FIG. 3 is a perspective view of a stylus for the portable data terminal of FIG. 1;

FIG. 4 is a cross-sectional view of the proximal end of the stylus in FIG. 3; and

FIG. 5 is a cross-sectional view of a stylus for a portable data terminal according to another embodiment of the invention.

### Detailed Description of the Invention

Reference will now be made in detail to the present invention, examples of which are illustrated in the accompanying drawings, wherein like reference numerals refer to like elements throughout. The following description will use nomenclature associated with a PDT, however those of ordinary skill in the art will recognize that the present invention is applicable to a variety of other devices with a touch screen interface, including personal data assistants (PDAs). Touch screen devices may include voltmeters, oscilloscopes, logic analyzers, and any other hand held, bench top, or rack mounted instruments. Hand held devices, such as cell phones, satellite phones, telemetric devices, and other hand held devices are also to be classified as PDTs for the purposes of this specification. The term PDT shall also include any computer terminal display that has a touch screen interface. These may comprise kiosks, outdoor terminal interfaces, industrial computer interfaces, commercial computer interfaces, and other computer displays. Additionally, the term PDT may comprise barcode scanners and consumer electronics.

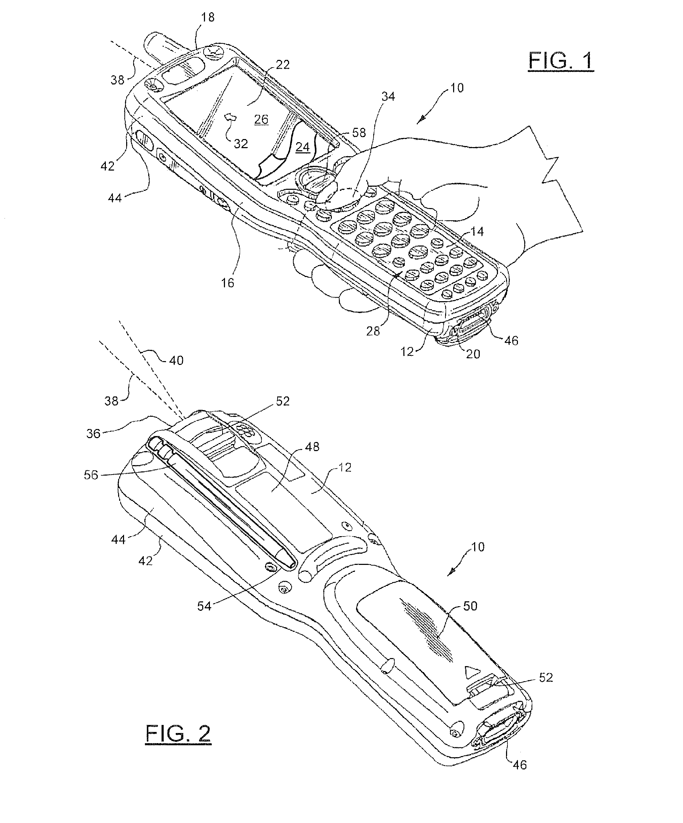

Referring to FIG. 1, a portable data terminal (PDT) 10 includes a housing 12 having an upper surface 14, side surface 16, front surface 18, and rear surface 20. The PDT 10 utilizes a popular form factor, but in some embodiments may further include a handle (not shown).

The housing 12 generally supports a variety of components, including a battery (not shown but typically located the rear half of the body) and a touch screen 22 comprising a display 24 and a touch sensitive overlay 26 disposed over the display. In this manner, the touch screen 22 operates as a data input interface. The housing 12 may further include a keyboard 28 enabling input of data. PDT 10 may also include a graphical user interface 30, or "GUI", integrated with the display 24. GUI 30 may include a pointer 32 that is moved by an operator to select between various displayed (sometimes referred to as "virtual") control buttons displayed on display 24. The pointer 32 may be moved during web browsing to select a text or icon hyperlink control button for highlighting. Control buttons may also be displayed for selecting between various menu options. In one example, the control buttons may be a series of icons. Selecting one of the icons changes the mode of operation of the PDT 10 in accordance with the selected icon. The PDT 10 includes a pointer controller 34 enabling movement of the pointer 32. The pointer controller 34 may be provided by an arrow navigation matrix, a trackball or a joystick. In some embodiments, the GUI includes a "virtual" keyboard 28, thereby obviating the need for additional hardware.

The portable data terminal 10 may further include a scan engine 36 integrated into the front surface 18 of the PDT. The scan engine 36 may comprise, for example, an image engine or a laser engine aligned along a longitudinal axis 38. An i imaging axis 40 of the portable data terminal 10 extends in the general direction of the longitudinal axis 38, but may extend in a direction slightly angularly downward with respect to longitudinal axis. The housing 12 typically includes an upper clam shell 42 and a lower clam shell 44 to encapsulate the image engine and control circuits (not shown).

The portable data terminal 10 may further include a data/charging port 46. The data/charging port 46 typically comprises a proprietary interface with one set of pins or pads for the transmitting and receiving of data and a second set of pins or pads for receiving power for powering the system and/or charging the battery.

The touch screen 22 comprises either a color or black and white liquid crystal display 24 with a touch sensitive overlay 26 mounted on top of the display. The display 24 is used for displaying graphics, text, and other elements to the user. The touch screen 22 is preferably used with a stylus to select elements from the screen, draw figures, or enter text with a character recognition program, for example.

Referring to FIG. 2, the housing 12 of the portable data terminal 10 includes a lower side 48 which may include a battery compartment 50 and a strap clip 52. The housing 12 may further include a receptacle 54 for receiving and retaining a stylus 56 for activation of the touch screen 22. The receptacle 54 may be located in any convenient location. In the illustrated embodiment, the receptacle 54 is located on the rear surface 20 of the PDT housing 12, but may also be located on the side surface 16 or in the handle, if present.

In use, the user may actuate a trigger button 58 to initiate an image capture via the scan engine 36. The captured image is analyzed, *e.g.*, decoded, to identify the data it represents. The decoded data is stored and possibly displayed on the PDT 10. Additional processing of the data may take place on the PDT 10 and/or a data processing resource to which the data is transmitted via any available transport mechanism on the PDT. Some examples of known transport mechanisms utilized by PDTs include: Bluetooth, WiFi, GSM, CDMA, USB, IrDA, removable FLASH memory, parallel and serial ports (including for example, RS-232).

The stylus generally resembles a conventional writing implement. In the prior art, the stylus typically includes a solid plastic tip to make contact with the touch sensitive overlay. Although in many instances the solid tip was rounded, the delicate nature of the overlay frequently resulted in the stylus tip scratching the overlay. In place of a stylus, some users have alternatively used the tip of a finger or fingernail, or a conventional pen or pencil to contact the touch screen. When a fingernail, conventional writing implement, or other sharp object is used, damage to the touch screen frequently occurs, such as scratching or marring.

Efforts in the industry to solve the problem of scratching the delicate overlay include fabrication and installation of an auxiliary overlay that may be periodically replaced when damaged. The auxiliary overlay adds cost to the touch screen, typically borne by the consumer.

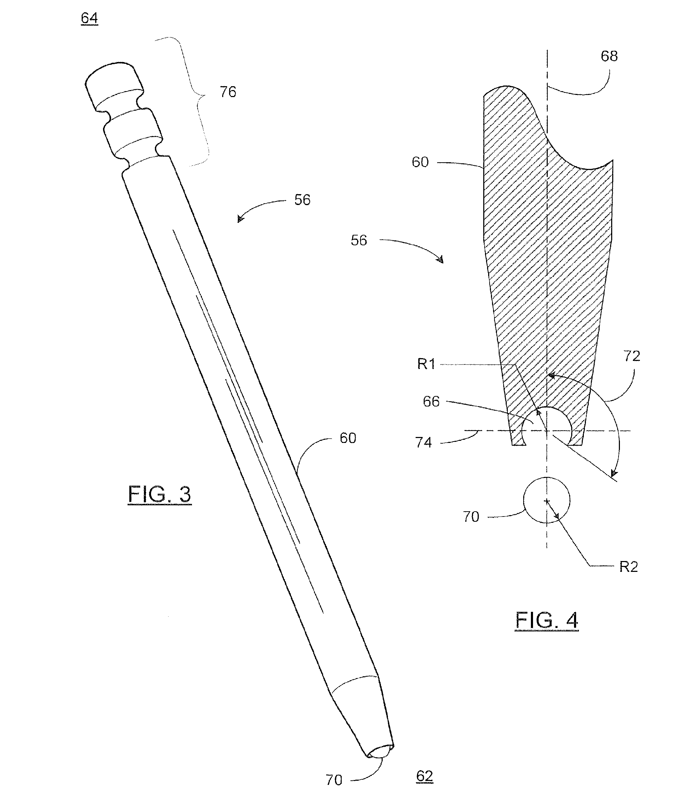

According to one embodiment of the present invention illustrated in FIGS. 3 and 4, a stylus 56 is provided that decreases potential damage to the touch screen 22. The stylus includes an elongated cylindrical body 60 having a proximal end 62 and an opposing distal end 64. In one embodiment, the proximal end 62 tapers to a frustoconical tip. The proximal end 62 of the stylus 56 defines an internal spherical socket 66 having radius R1 centered about a stylus longitudinal axis 68. The socket 66 is configured to capture a roller ball 70. The roller ball 70 has a second, smaller spherical radius R2 to permit the ball to freely rotate within the socket 66. The second spherical radius R2 of the roller ball 70 is less than the first spherical radius by a distance ranging from 0.025 to 0.250 millimeters (0.001 - 0.010 inches).

The socket 66 is configured to both retain the roller ball 70 from dropping out of the stylus 56, and to prevent the ball from completely withdrawing into the stylus body 60 when force is exerted. The spherical radius R1 in the socket 66 further defines a capturing and retention region 72 to accomplish this purpose. The region 72 defines an arc below a horizontal axis 74 of the socket 66 that, when rotated about the stylus longitudinal axis 68, forms a cup region to secure the roller ball 70 from falling out of the stylus body 60. The capturing and retention region 72 further defines an arc above the horizontal axis 74 that, when rotated about the stylus longitudinal axis 68, forms a cap to prevent the roller ball 70 from pushing too far up into the stylus body 60 and preventing the ball from protruding from the tip. In the illustrated example, the region 72 is an arc of approximately 135° (45° below horizontal axis 74, and 90° above the axis) and sweeps circumferentially about the stylus longitudinal axis 68. The socket 66 may further be configured to assure the roller ball 70 protrudes a predetermined distance from the tip of the body 60 when writing on the touch screen, as will be explained in detail hereinbelow.

The distal end 64 of the body 60 may include a capture element 76 for securing the stylus into the receptacle 54 in the housing 12 (FIG. 1). In the disclosed embodiment, the capture element 76 is a plurality of grooves spanning a perimeter of the stylus body. The grooves engage with corresponding protrusions within the stylus receptacle 54, typically in slight interference-fit fashion, to secure the stylus 56 when not in use.

The body 60 of the stylus 56 may be manufactured from any suitable material, for example by plastic injection molding. The die required to form the socket 66 may be broken into pieces after molding to leave the socket 66 intact or, if the body 60 is sufficiently flexible, the body may be forcibly pulled or otherwise removed from the spherical die.

The roller ball 70 is manufactured from a material that provides a sufficiently high coefficient of friction relative to the overlay 26 that the frictional forces will cause the ball to roll within the socket 66 when contacting the overlay, rather than simply skidding along the surface. The dynamic coefficient of friction (µ) is defined as friction force F divided by the applied load N (µ = F/N) at a given sliding speed. Additionally, the material for the roller ball 70 should exhibit high resistance to wear, which is the progressive loss of material due to interacting surfaces in relative motion. One choice of material is an engineered thermoplastic such as polyoxymethylene, sold under the trade name Delrin^{®} acetal resin by E.I. du Pont de Nemours and Company. Delrin^{®} resin is available in a range of properties, and the inventor has identified that a coefficient of friction in the range of 0.2 - 0.4 provides sufficient contact resistance with the overlay 26 to permit the roller ball 70 to smoothly rotate in the socket 66. A coefficient of friction in the range of 0.25 - 0.30 is preferred. The roller ball 70 and stylus body 60 may be sufficiently flexible so as to allow the ball to be forced, or snapped, into place.

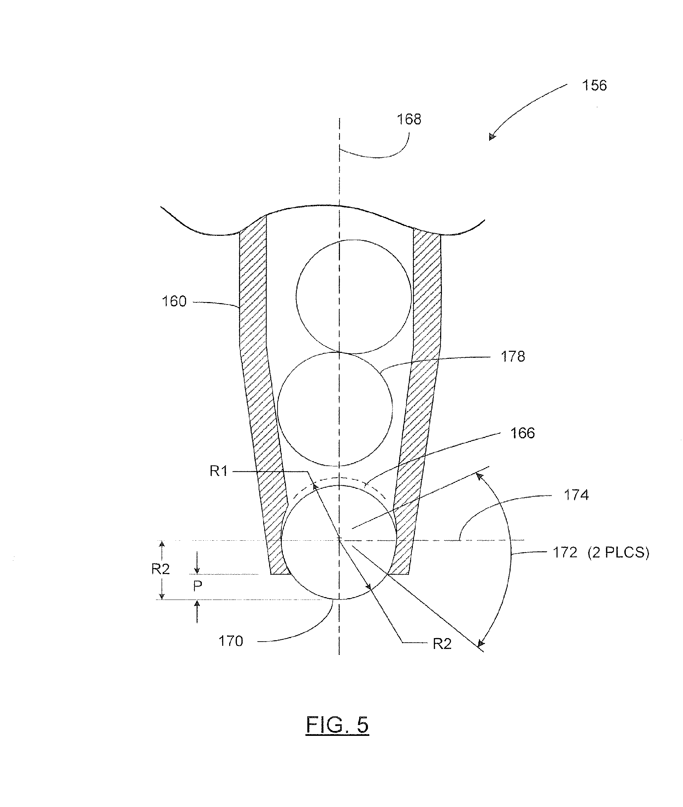

Turning to FIG. 5, another embodiment of a stylus 156 is illustrated having a hollow body 160. In this embodiment, the capturing and retention region 172 of the socket 166 spans a smaller arc, approximately 90° (45° above and below the horizontal axis174), sweeping circumferentially about the stylus longitudinal axis 168. As can be seen with reference to the drawing, the socket 166 is configured to allow the roller ball 170 to protrude a distance P from the tip of the stylus body 160. In the disclosed embodiment, the roller ball 170 protrudes approximately one quarter of the ball diameter (*e.g.*, R2/2) from the tip when in the writing mode (*e.g.*, the ball captured in the cap). However, any positive value of P less than one half of the ball diameter is acceptable. The upper portion of the capturing and retention region 172 (*e.g.*, the cap) prevents the roller ball 170 from pushing up into the hollow portion of the tube when force is applied to the stylus during writing.

The hollow portion of the stylus 156 may further include a spare roller ball 178. Two spare roller balls 178 are illustrated. In the event the primary roller ball 170 becomes soiled, scratched, or otherwise limited in use, the ball may be ejected and replaced by one of the spare roller balls 178.

One advantage of the stylus described herein is that the roller ball extends the life of the delicate overlay material on the touch screen. Under conditions noted in the prior art, a conventional stylus will scratch and mar the sensitive overlay material. The stylus of the present invention reduces wear on the overlay by providing a roller ball having a dynamic coefficient of friction that operates to rotate the ball on the overlay, rather than glide as if stationary.

Another advantage of the stylus described herein is that the roller ball material (*e.g.*, polyoxymethylene) requires no lubrication. The ball therefore rotates freely within the socket regardless of the choice of material for the body, thereby affording a wide range of materials and decorative styles for the stylus body.

While the present invention has been described with reference to a number of specific embodiments, it will be understood that the true spirit and scope of the invention should be determined only with respect to claims that can be supported by the present specification. Further, while in numerous cases herein wherein systems and apparatuses and methods are described as having a certain number of elements it will be understood that such systems, apparatuses and methods can be practiced with fewer than the mentioned certain number of elements. Also, while a number of particular embodiments have been described, it will be understood that features and aspects that have been described with reference to each particular embodiment can be used with each remaining particularly described embodiment.

Among the apparatus and methods set forth herein there is set forth herein:
A1. A portable data terminal comprising:
   a housing comprising an upper surface, a side surface, a front surface, and a rear surface;
   a touch screen coupled to the upper surface of the housing, the touch screen comprising a display and a touch sensitive overlay;
   a keyboard coupled to the housing for enabling input of data; and
   a stylus for activating the touch screen, the stylus comprising a body having a proximal end and a distal end, the proximal end having an internal socket defined by a first spherical radius, and further comprising a roller ball captured by the socket, the roller ball being defined by a second spherical radius that is less than the first spherical radius, the roller ball protruding from the proximal end of the body by a distance P, wherein P is less than one half of the second spherical radius.
A2. The portable data terminal of A1, wherein the roller ball is comprised of an engineered thermoplastic.
A3. The portable data terminal of A2, wherein the engineered plastic is polyoxymethylene.
A4. The portable data terminal of A1, wherein the housing comprises a receptacle configured to accept the stylus.
A5. The portable data terminal of A4, wherein the distal end of the stylus comprises a capture element for securing the stylus into the receptacle in the housing.
A6. The portable data terminal of A5, wherein the capture device is a groove circumferentially spanning the body of the stylus.
A7. The portable data terminal of A6, wherein the capture device is a plurality of grooves spanning a perimeter of the stylus body.
A8. The portable data terminal of A1, further comprising a handle coupled to a lower side of the housing.
A9. The portable data terminal of A1, wherein the roller ball comprises a dynamic coefficient of friction relative to the touch sensitive overlay of greater than 0.2.
A10. The portable data terminal of A9, wherein the dynamic coefficient of friction relative to the touch sensitive overlay is in the range of 0.2 - 0.4.
A11. The portable data terminal of A9, wherein the dynamic coefficient of friction relative to the overlay is in the range of 0.25 - 0.30.
B1. A stylus for activating the touch screen of a portable data terminal, comprising:
   a body having a proximal end and an opposing distal end, the proximal end comprising an internal socket defined by a first spherical radius, the socket comprising a capturing and retention element having a cup region and a cap region; and
   a roller ball disposed within the capturing and retention region of the socket, the roller ball comprising a second spherical radius that is less than the first spherical radius, the roller ball protruding from the proximal end of the body by a distance P, wherein P is less than one half of the second spherical radius, the roller ball comprised of an engineered thermoplastic.
B2. The stylus of B 1, wherein the engineered plastic is polyoxymethylene.
B3. The stylus of B2, wherein the body is hollow at least at the proximal end.
B4. The stylus of B3, further comprising a spare roller ball.
B5. The stylus of B1, wherein the second spherical radius is less than the first spherical radius by a distance ranging from 0.025 to 0.250 millimeters.
B6. The stylus of B1, the body further comprising a capture element on the distal end configured for securing the stylus in a receptacle of the portable data terminal.
B7. The stylus of B6, wherein the capture element comprises a groove circumferentially spanning the body of the stylus.
B8. The stylus of B1, wherein the distance P is defined when the roller ball is captured by the cap of the capturing and retention region of the socket.
B9. The stylus of B1, wherein the distance P is approximately one quarter of the second spherical radius.

## Claims

1. A portable data terminal comprising:
a housing comprising an upper surface, a side surface, a front surface, and a rear surface;
a touch screen coupled to the upper surface of the housing, the touch screen comprising a display and a touch sensitive overlay;
a keyboard coupled to the housing for enabling input of data; and
a stylus for activating the touch screen, the stylus comprising a body having a proximal end and a distal end, the proximal end having an internal socket defined by a first spherical radius, and further comprising a roller ball captured by the socket, the roller ball being defined by a second spherical radius that is less than the first spherical radius, the roller ball protruding from the proximal end of the body by a distance P, wherein P is less than one half of the second spherical radius.

2. The portable data terminal of claim 1, wherein the roller ball is comprised of an engineered thermoplastic.

3. The portable data terminal of claim 1, wherein the housing comprises a receptacle configured to accept the stylus.

4. The portable data terminal of claim 3, wherein the distal end of the stylus comprises a capture element for securing the stylus into the receptacle in the housing.

5. The portable data terminal of claim 1, further comprising a handle coupled to a lower side of the housing.

6. The portable data terminal of claim 1, wherein the roller ball comprises a dynamic coefficient of friction relative to the touch sensitive overlay of greater than 0.2.

7. The portable data terminal of claim 6, wherein the dynamic coefficient of friction relative to the touch sensitive overlay is in the range of 0.2 - 0.4.

8. The portable data terminal of claim 6, wherein the dynamic coefficient of friction relative to the overlay is in the range of 0.25 - 0.30.

9. A stylus for activating the touch screen of a portable data terminal, comprising:
a body having a proximal end and an opposing distal end, the proximal end comprising an internal socket defined by a first spherical radius, the socket comprising a capturing and retention element having a cup region and a cap region; and
a roller ball disposed within the capturing and retention region of the socket, the roller ball comprising a second spherical radius that is less than the first spherical radius, the roller ball protruding from the proximal end of the body by a distance P, wherein P is less than one half of the second spherical radius, the roller ball comprised of an engineered thermoplastic.

10. The stylus of claim 9, wherein the engineered plastic is polyoxymethylene.

11. The stylus of claim 10, wherein the body is hollow at least at the proximal end.

12. The stylus of claim 9, wherein the second spherical radius is less than the first spherical radius by a distance ranging from 0.025 to 0.250 millimeters.

13. The stylus of claim 9, the body further comprising a capture element on the distal end configured for securing the stylus in a receptacle of the portable data terminal.

14. The stylus of claim 9, wherein the distance P is defined when the roller ball is captured by the cap of the capturing and retention region of the socket.

15. The stylus of claim 9, wherein the distance P is approximately one quarter of the second spherical radius.
